Europäisches Patentamt

European Patent Office

Office européen des brevets

(11) Veröffentlichungsnummer : **0 196 003**
**B1**

(12) # EUROPÄISCHE PATENTSCHRIFT

(45) Veröffentlichungstag der Patentschrift :
28.09.88

(51) Int. Cl.⁴ : **B 65 G 53/54, B 65 G 53/52**

(21) Anmeldenummer : 86103680.4

(22) Anmeldetag : 18.03.86

(54) Drehgelenk für eine pneumatische, mit einem Ausleger schwenkbewegliche Förderleitung.

(30) Priorität : 23.03.85 DE 3510702

(43) Veröffentlichungstag der Anmeldung :
01.10.86 Patentblatt 86/40

(45) Bekanntmachung des Hinweises auf die Patenterteilung : 28.09.88 Patentblatt 88/39

(84) Benannte Vertragsstaaten :
AT BE CH DE FR GB IT LI NL SE

(56) Entgegenhaltungen :
DE-A- 2 526 530
GB-A- 1 268 001

(73) Patentinhaber : Bühler-MIAG GmbH
Ernst-Amme-Strasse 19
D-3300 Braunschweig (DE)

(72) Erfinder : Heckel, Hans
Emil-Berg-Strasse 7
D-3302 Cremlingen (DE)

**Beschreibung**

Gegenstand der Erfindung ist ein Drehgelenk für eine pneumatische, mit einem Ausleger schwenkbewegliche Förderleitung, insbesondere für das Schwenkgelenk von Saugheberauslegern, mit zwei aneinandergelagerten Gelenkteilen, von denen der eine Gelenkteil als Lagerkörper ausgebildet und an einem Rezipienten befestigt ist und der andere Gelenkteil als Drehzylinder gestaltet ist, welcher die in den Rezipienten mündende Förderleitung queraxial aufnimmt und gemeinsam mit dieser relativ zu dem ersten Gelenkteil drehbeweglich ist, sowie mit einer Dichtung zum Abdichten beider Gelenkteile gegen Atmosphäre.

Derartige Drehgelenke sind bei allen auf einem beweglichen Ausleger angeordneten Förderleitungen unerläßlich, um die Förderluft und das von ihr transportierte Gut von dem beweglichen Teil des Fördergerätes durch den Schwenk- bzw. Gelenkpunkt hindurch auf dessen stationären Teil hinüberleiten zu können und dabei den für die Förderung notwendigen Unterdruck aufrechtzuerhalten.

Aus der DE-PS 684 220 ist ein Rohrausleger für Saugförderanlagen bekannt, bei dem zwischen Rohrausleger einerseits und Rezipient andererseits ein aus einem um eine senkrechte Achse drehbeweglichen Krümmer und einem oben in diesem gelagerten, um eine waagerechte Achse schwenkbeweglichen Küken bestehendes Drehgelenk vorgesehen ist, wobei der Krümmer in einer halbzylindrischen Gelenkpfanne das Küken schwenkbeweglich aufnimmt und letzteres einen queraxialen Durchtrittskanal hat, welcher mit seinem einen Ende in den Krümmer und mit seinem anderen Ende in das Rohr des fest mit ihm verbundenen Rohrauslegers mündet.

Stand der Technik ist außerdem ein Saugheber mit einer Saugförderleitung im Ausleger, die einen um eine waagerechte Achse beweglichen Drehzylinder queraxial durchdringt und mit ihm fest verbunden ist ; dieser Drehzylinder ist in einem am Rezipienten befestigten Lagerkörper abgestützt und bildet gemeinsam mit ihm das Drehgelenk für die Förderleitung ; hierbei ist der Drehzylinder gegenüber dem Lagerkörper mittels Dichtstreifen abgedichtet, die durch Haltestücke am Lagerkörper fixiert sind (GB-PS 1 268 001).

Beide bekannten Drehgelenke haben im praktischen Betrieb nicht sonderlich befriedigt ; sie sind kompliziert im Aufbau und bedürfen einer Feinbearbeitung der Gelenkteile, wodurch sie teuer werden, was noch dadurch gesteigert wird, daß — damit Drehzylinderachse und Auslegerschwenkachse fluchten — Ausleger und Drehzylinder auf einem Bohrwerk gemeinsam gebohrt werden müssen. Hinzu kommt, daß das erstgenannte Drehgelenk ausschließlich durch die mehr oder weniger genaue Passung dichtet, also eine bloße Spaltdichtung ist, die dauernd entsprechende Leckverluste hat und nicht regendicht ist. Das zweitgenannte Drehgelenk vom Stand der Technik besitzt zwar zusätzlich elastische Dichtstreifen, doch sind diese wegen ihrer in Querrichtung geringen freibeweglichen Länge relativ unelastisch und erfordern dadurch eine genaue mechanische Bearbeitung des Drehzylinders ; außerdem ist hier ein axiales Abdichten des Drehzylinders notwendig, was weitere Dichtungen und mechanisch bearbeitete Gleitflächen an beiden Stirnseiten sowie ein genaues axiales Führen des Drehzylinders voraussetzt ; aufgrund der minimalen Dicke der Dichtstreifen von 1-2 mm legen sich diese in Falten und heben vom Drehzylinder ab, Regen und Schmutz gelangen unter die Dichtlippe und in den Rezipienten und weiter bis in die Zellenradschleuse, so daß letztere an ihren Dichtflächen festrostet und schließlich blockiert.

Der Erfindung liegt die Aufgabe zugrunde, ein Drehgelenk der eingangs zitierten Gattung dahingehend zu verbessern, daß es bei ausreichender Beweglichkeit einfacher und ohne genaue Passungen sowie gemeinsames Bohren mit dem Ausleger herstellbar ist und seine Gelenkteile zuverlässig sowohl vakuumdicht als auch regen- und staubdicht von einer Dichtung abgedeckt werden, die ihrerseits bei optimaler Beweglichkeit bzw. Anschmiegsamkeit dauerhaft und wartungsfrei, leicht montierbar sowie nachspannbar sein soll.

Diese Aufgabe ist durch die Merkmale im Kennzeichnungsteil des Patentanspruches 1 erfindungsgemäß gelöst.

Die Ausbildung der Dichtung als ein den Drehzylindermantel im Bereich der Förderleitung umschließendes Dichtungsblatt mit vorgespannten Dichtkanten sowie die Gestaltung des Lagerkörpers mit in bestimmter Weise angeordneten streifenförmigen Aufnahmeflächen, auf welchen dieses Dichtungsblatt mit Hilfe von Spannmitteln lösbar und nachstellbar festgespannt ist, lassen grobe Toleranzen zwischen Lagerkörper einerseits und Drehzylinder andererseits, das heißt Abweichungen des Drehzylinders aus der idealen Drehachse (Auslegerschwenkachse) sowie von der idealen Zylinderform zu, weil sie von den langen, dicken Dichtlappen kompensiert werden, wobei die Dichtlappen sich eng an den Drehzylinder schmiegen und die Dichtkanten aufgrund ihrer Vorspannung ständig fest an diesen gepreßt werden, so daß beide Gelenkteile optimal gegen Atmosphäre und Regen bzw. Schnee und Staub abgedichtet werden.

Die Ausbildungsform des Dichtungsblattes nach Patentanspruch 2 ist wegen der sich dabei ergebenden langen Dichtlappen, deren freibewegliche Länge das Acht- bis Zehnfache der Blattdicke beträgt, abdichtungsmäßig besonders günstig und herstellungsmäßig einfach.

Die Ausbildung nach Patentanspruch 3 ermöglicht es, das Dichtungsblatt in den Eckpartien glattzuziehen, um Faltungen zu vermeiden und bei Bedarf leicht nachzuspannen.

Der Patentanspruch 4 gibt Werkstoffe für das Dichtungsblatt an, die sich besonders gut an den Drehzylinder anlegen, wobei Silikon den Vorzug hat, für tiefe Temperaturen geeignet und resistent gegen starke Sonnenstrahlung zu sein.

Der Patentanspruch 5 lehrt eine material- und arbeitsaufwandmäßig günstige Bauform des Lagerkörpers für den Drehzylinder mit idealen Aufnahmeflächen für das Dichtungsblatt sowie die Spannmittel zum Fixieren des letzteren.

Die Patentansprüche 6 und 7 umreißen vorteilhafte Möglichkeiten für das Vorspannen der Dichtkanten des Dichtungsblattes.

Der Patentanspruch 8 lehrt eine Befestigungsart für die Klemmleisten, welche einfach und zuverlässig ist sowie einen schnellen Austausch des Dichtungsblattes bei Bedarf ermöglicht.

Die im Patentanspruch 9 angegebene Bauform für den Drehzylinder ist wie der Lagerkörper in der Herstellung einfach und bedarf — weil sein Führungsrohr die Förderleitung lose aufnimmt — keiner präzisen Lagerung in diesem, das heißt, der Drehzylinder kann innerhalb grober Toleranzen relativ zur Auslegerschwenkachse drehen, ein Fluchten der Achsen ist also entbehrlich.

Der Vorschlag gemäß Patentanspruch 10 erspart eine Oberflächenbearbeitung und gewährleistet, daß der Drehzylinder an Stellen seines Mantels, die dem Wetter ausgesetzt sind, rostfrei bzw. seine Oberflächenbeschaffenheit unverändert bleibt.

Die Weiterausbildung nach Patentanspruch 11 schließlich sorgt dafür, daß auch durch den Spalt zwischen Führungsrohr und Förderleitung hindurch Falschluft, Regenwasser und Schnee sowie Staub nicht in den Rezipient und die ihm nachgeordnete Zellenradschleuse eindringen können.

Weitere Einzelheiten und Vorteile des Drehgelenkes nach der Erfindung werden anhand eines Ausführungsbeispiels im nachfolgenden beschrieben. Es zeigen

Fig. 1 eine Seitenansicht des Drehgelenkes eines Saughebers und teilweise auch dessen Rezipient,

Fig. 2 einen Querschnitt durch das Drehgelenk und den Rezipient nach Linie II-II in Fig. 1, wobei jedoch in der oberen Figurhälfte Förderleitung, Drehgelenk und Prallkopf in Draufsicht veranschaulicht sind,

Fig. 3 eine Ansicht des Dichtungsblattes in gestrecktem Zustand,

Fig. 4 eine perspektivische Darstellung des Drehgelenkes, wobei das Dichtungsblatt und teilweise auch die Spannmittel ausgebrochen gezeichnet sind,

Fig. 5 einen Ausschnitt V aus Fig. 1 in größerem Maßstab und

Fig. 6 einen Ausschnitt VI aus Fig. 2 in größerem Maßstab.

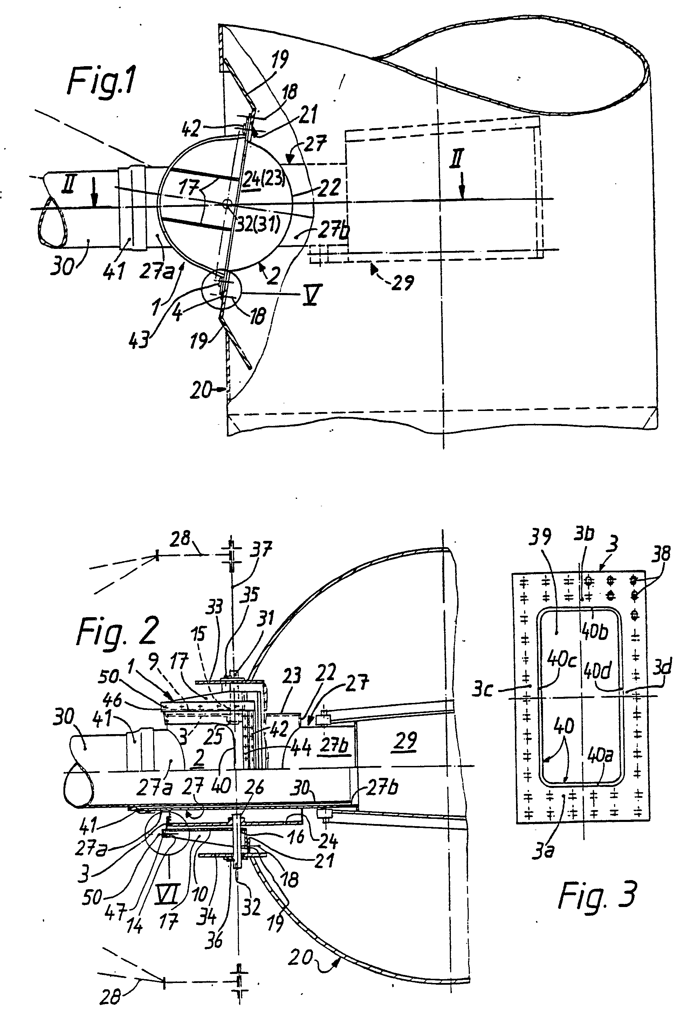

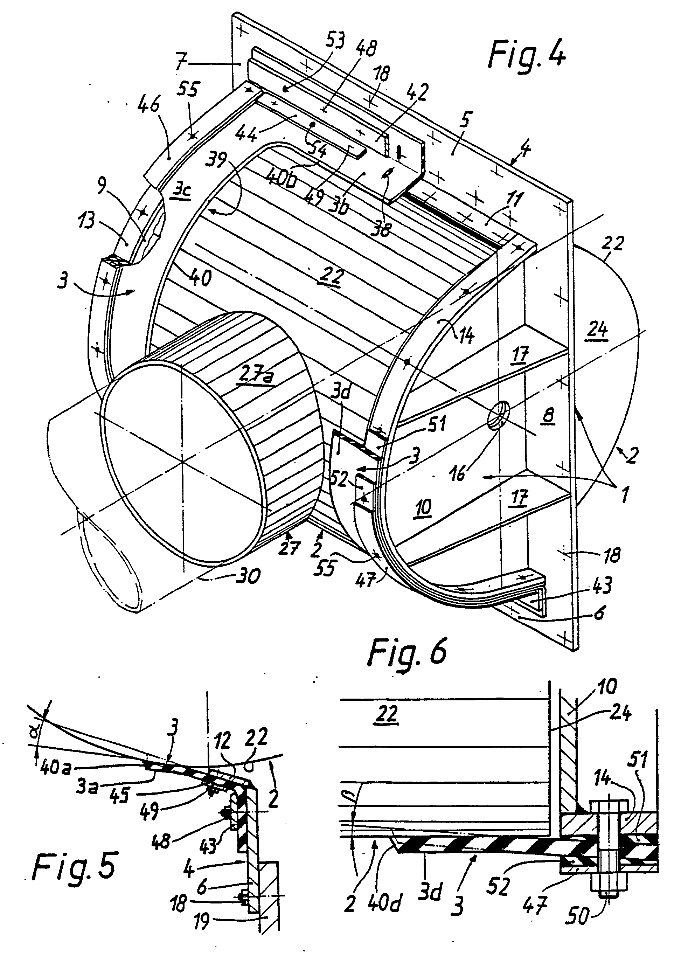

Das Drehgelenk ist im wesentlichen aus zwei aneinandergelagerten Gelenkteilen aufgebaut, nämlich einem Lagerkörper 1 und einem Drehzylinder 2, welche von einer Dichtung in Form eines vier Dichtlappen 3a bis 3d umfassenden Dichtungsblattes 3 aus Silikon gegen Atmosphäre abgedichtet werden. Der Lagerkörper 1 ist aus einem Flanschrahmen 4 mit zwei waagerechten Schenkeln 5,6 sowie zwei senkrechten Schenkeln 7,8 und zwei annähernd halbkreisförmigen Seitenwangen 9,10 zusammengesetzt, die mit einem der Länge des Drehzylinders 2 entsprechenden Abstand zueinander auf einer Seite des Flanschrahmens 4 angeordnet und mit ihm verschweißt sind. Zwei unmittelbar an den Flanschrahmen 4 stoßende Stege 11, 12 verbinden oben und unten die beiden Seitenwangen (Fig. 1, 4). Jeder dieser beiden Stege 11, 12 ist mit einer bestimmten Neigung zur Längsmittelebene des Flanschrahmens 4 angeordnet und gibt damit diese Neigung dem zugeordneten Dichtlappen 3a bzw. 3b des Dichtungsblattes 3 vor. Die Seitenwangen 9,10 haben je an ihrem halbkreisförmigen Rand einen axial auswärts weisenden Flansch 13 bzw. 14 sowie nahe des Flanschrahmens 4 eine Lagerbohrung 15 bzw. 16 und sind durch je zwei außen angeschweißte Rippen 17 versteift. Der Lagerkörper 1 ist mittels Schrauben 18, welche durch ringsherum in seinem Flanschrahmen 4 (Fig. 4) eingebrachte Bohrungen gesteckt sind, an einer Montageplatte 19 befestigt. Die Montageplatte 19 ist mit dem Rezipient 20 des Saughebers zu einer Einheit verschweißt und hat eine Ausnehmung 21 für den Durchgang von Drehzylinder 2, Führungsrohr und Förderleitung in das Innere des Rezipienten 20 (Fig. 1, 2). Wie sich insbesondere aus den Figuren 4, 5 und 6 ergibt, bilden die Außenflächen der beiden waagerechten Schenkel 5,6 des Flanschrahmens 4 sowie die Außenflächen der beiden halbkreisförmigen Flansche 13,14 der Seitenwangen 9,10 vier streifenförmige, eine Art räumlichen Flächenrahmen verkörpernde Aufnahmeflächen des Lagerkörpers 1 zum Aufnehmen des Dichtungsblattes 3.

Der Drehzylinder 2 ist als ein von einem Mantel 22 und zwei Stirnwänden 23, 24 umgrenzter Hohlzylinder aus nichtrostendem Stahlblech gestaltet, der in jeder Stirnwand 23 bzw. 24 eine zentrale Lagerbohrung 25 bzw. 26 besitzt. In der Längsmitte des Drehzylinders 2 durchdringt ein Führungsrohr 27 so seinen Mantel 22, daß sich ihre Längsachsen schneiden (Fig. 1, 2). Das mit dem Drehzylinder 2 verschweißte Führungsrohr 27 ragt mit seinem kurzen Stumpf 27a nach außen in Richtung des Auslegers 28 des Saughebers und mit seinem langen Stumpf 27b in den Rezipient 20 hinein und trägt am Ende dieses Stumpfes 27b relativ zu ihm schwenkbeweglich einen Prallkopf 29. Das Führungsrohr 27 nimmt gleitend beweglich die an dem Ausleger 28 entlangführende, pneumatische Förderleitung 30 auf, die bis nahe an das Ende des Stumpfes 27b führt (Fig. 2). Eine Dichtungsmanschette 41 schließt den Spalt zwischen Förderleitung 30 und Führungsrohr 27 ab. Der Drehzylinder 2 ist mit Hilfe seiner Lagerbohrungen 25,26 drehbeweglich auf zwei Steckachsen 31,32 gelagert, wovon die Steckachse 31 von der Lagerbohrung 15 der Seitenwange 9 sowie der koaxialen Lagerbohrung in einer mit dem Rezipienten 20 verschweißten Rippe 33 aufgenommen wird und durch einen Achshalter 35 gesichert ist und die Steckachse 32 von der Lagerbohrung 16 der Seitenwange 10 sowie der gleichachsigen Lagerbohrung in einer ebenfalls mit dem Rezipienten 20 verschweißten Rippe 34 aufgenommen wird und mittels eines Achshalters 36 gesichert ist (Fig. 2). Die beiden Steckachsen 31,32 fluchten mit der Schwenkachse 37 des Auslegers 28, so daß bei der Schwenkbewegung von Ausleger 28 samt Förderleitung 30 das Führungsrohr 27 und der Drehzylinder 2 diese Schwenkbewegung im selben Winkel mit ausführen.

Das Dichtungsblatt 3 aus Silikon ist von rechteckiger Form und 8 mm dick und weist nahe seinem Rande oben und unten je zwei Reihen sowie links und rechts je eine Reihe Befestigungslöcher 38 auf, welche als zum Dichtungsblatt längsachsparallele Langlöcher geformt sind. Das Dichtungsblatt 3 hat eine achssymmetrische, rechteckige Ausnehmung 39, an deren Rand 40 das Dichtungsblatt 3 angeschärft ist (Fig. 3). Der Rand 40 der Ausnehmung 39 ist identisch mit den vier Innenseiten 40a, 40b, 40c und 40d des Dichtungsblattes 3, welche seine Dichtkanten darstellen. Die Ausnehmung 39 ist in ihrer Länge entsprechend dem Schwenkwinkel des Führungsrohres 27 bzw. des Auslegers 28 bemessen.

Zum Festspannen des Dichtungsblattes 3 auf den Schenkeln 5,6 des Flanschrahmens 4 und seinen Stegen 11, 12 sowie auf den Flanschen 13,14 der Seitenwangen 9, 10 dienen Spannmittel in Form von geraden und gekrümmten Klemmleisten, die mittels Schrauben fixiert sind, nämlich oben die gerade Klemmleiste 42 mit Schrauben 48 sowie die gerade zusätzliche Klemmleiste 44 mit Schrauben 49 und unten die gerade Klemmleiste 43 mit Schrauben 48 sowie die gerade zusätzliche Klemmleiste 45 mit Schrauben 49 und ferner seitlich links die gekrümmte Klemmleiste 46 und seitlich rechts die gekrümmte Klemmleiste 47, beide mit Schrauben 50. Für die Schrauben 48 bzw. 49 bzw. 50 haben die Klemmleisten 42 bis 47 in entsprechendem Abstand voneinander angeordnete Durchgangslöcher 53 bzw. 54 bzw. 55.

Damit auch die beiden den Flanschen 13, 14 zugeordneten Dichtlappen 3c, 3d des Dichtungsblattes 3 mit einer vorgegebenen Neigung zum Mantel 22 des Drehzylinders 2 gehalten werden, ist auf der dem Dichtungsblatt 3 zugekehrten Aufnahmefläche jedes Flansches 13 bzw. 14 ein im Querschnitt keilförmiger Futterstreifen 51 und auf der dem Dichtungsblatt 3 zugekehrten Seite der diesem Flansch 13 bzw. 14 zugeordneten, gekrümmten Klemmleiste 46 bzw. 47 ein im Querschnitt keilförmiger Futterstreifen 52 angebracht, wobei die Dicke der Futterstreifen 51 zum Drehzylinder 2 hin abnimmt und die Dicke der Futterstreifen 52 zum Drehzylinder 2 hin zunimmt (Fig. 4, 6). Die im größeren Maßstab veranschaulichten Ausschnitte gemäß den Figuren 5 und 6 zeigen in einem geraden Bereich des Dichtungsblattes 3 (Fig. 5) und in einem gekrümmten Bereich des Dichtungsblattes 3 (Fig. 6) die durch die Stege 11 bzw. 12 einerseits und die Futterstreifen 51, 52 andererseits vorgegebene Richtung eines geraden bzw. gekrümmten Dichtlappens 3b bzw. 3d des Dichtungsblattes 3 in strichpunktierten Linien sowie deren durch den Drehzylinder 2 erzwungene Auslenkung (siehe die Winkel Alpha und Beta in den Figuren 5 und 6), welche das gewünschte Vorspannen der besagten Dichtkanten 40a bis 40d bewirkt.

Während des Betriebes des Saughebers muß sein Ausleger 28 immer wieder auf eine größere oder kleinere Ausladung eingestellt werden, wobei er abwärts oder aufwärts um die Schwenkachse 37 geschwenkt wird. Gemeinsam mit dem Ausleger 28 bewegen sich dabei die Förderleitung 30 sowie der Drehzylinder 2 mitsamt dem Führungsrohr 27 relativ zu dem am Rezipient 20 festen Lagerkörper 1. Hierbei gleitet der nichtrostende Drehzylinder 2 bzw. sein Mantel 22 unter dem Dichtungsblatt 3 hinweg, wobei dessen vier Dichtlappen 3a bis 3d sich so fest an den Mantel 22 schmiegen bzw. seine vier erfindungsgemäß unter Vorspannung stehenden Dichtkanten 40d bis 40a an diesen gepreßt werden, daß gute Dichtheit gegen Atmosphäre, Regenwasser und Schmutz erreicht wird. Die schneidenförmige Dichtkante 40a bzw. 40b eines geraden Dichtlappens 3a oder 3b des Dichtungsblattes 3 schält, indem sie als Schaber bzw. Abstreifer wirkt, bei der Bewegung des Drehzylinders 2 Wasser bzw. Schnee ebenso wie Schmutz etc. von seinem Mantel 22 ab.

Der mit der Erfindung erzielte Fortschritt besteht in einem aus einfachen Teilen ohne genaue Passungen kostengünstig zu fertigenden Drehgelenk, dessen abzudichtende Fläche unbearbeitet bleiben kann und dessen einteilige, blattförmige Dichtung ein Vielfaches der Dichtungsblattdicke lange und dicke und damit knicksteife Dichtlappen hat, ausreichende Dichtheit bei langer Lebensdauer garantiert, einen großen Bewegungsspielraum der Gelenkteile erlaubt sowie — weil gut zugänglich — in kürzester Zeit auswechselbar und nachspannbar ist; weitere Vorteile sind die Unempfindlichkeit des Dichtungsblattes gegen das Einziehen von Fremdkörpern, Eistropfen und -krusten, die Sichtbarkeit der Dichtfunktion, die Sicherheit gegen Festfrieren und die Möglichkeit zum Entfernen von eingezogenen Fremdkörpern durch einfaches Nach-oben-Klappen des betreffenden Dichtlappens.

**Patentansprüche**

1. Drehgelenk für eine pneumatische, mit einem Ausleger schwenkbewegliche Förderleitung (30), insbesondere für das Schwenkgelenk von Saugheberauslegern mit zwei aneinander gelagerten Gelenkteilen, von denen der eine Gelenkteil als Lagerkörper (1) ausgebildet und an einem Rezipienten befestigt ist und der andere Gelenkteil als Drehzylinder (2) gestaltet ist, welcher die in den Rezipienten mündende Förderleitung queraxial aufnimmt und gemeinsam mit dieser relativ zu dem ersten Gelenkteil drehbeweglich ist, sowie mit einer Dichtung zum Abdichten beider Gelenkteile gegen Atmosphäre, dadurch gekennzeichnet, daß die Dichtung ein den Mantel (22) des Drehzylinders (2) im Bereich der Förderleitung (30) umschließendes Dichtungsblatt (3) aus elastischem Material ist, das eine entsprechend dem Schwenkwinkel der Förderleitung (30) bemessene Ausnehmung (39) hat und das an seinen diese Ausnehmung (39) begrenzenden Dichtkanten (40a bis 40d) vorgespannt ist und daß am Lagerkörper (1) als Befestigungsflächen für das Dichtungsblatt (3) streifenförmige Aufnahmeflächen (5, 6, 13, 14) ausgebildet sind, wovon zwei (5, 6) sich annähernd diametral einander gegenüberliegend in derselben Ebene am Drehzylinder (2) entlang erstrecken und zwei (13, 14) je an eine Stirnwand (23, 24) des Drehzylinders (2) grenzen und mit dessen Mantelfläche (22) axial deckungsgleich sind und daß Spannmittel (42, 43, 46, 47) vorgesehen sind, mit deren Hilfe das Dichtungsblatt (3) auf diesen Aufnahmeflächen (5, 6, 13, 14) lösbar fixiert ist.

2. Drehgelenk nach Anspruch 1, dadurch gekennzeichnet, daß das Dichtungsblatt (3) rechteckig und von konstanter Dicke ist und ringsherum an seinem Rand mit im Abstand voneinander angeordneten Befestigungslöchern (38) versehen ist sowie eine achssymmetrische, rechteckige Ausnehmung (39) besitzt, an deren Rand (40) das Dichtungsblatt (3) angeschärft ist.

3. Drehgelenk nach Anspruch 2, dadurch gekennzeichnet, daß die Befestigungslöcher (38) im Dichtungsblatt (3) längsachsparallel zu letzterem angeordnete Langlöcher sind.

4. Drehgelenk nach Anspruch 2, dadurch gekennzeichnet, daß das Dichtungsblatt (3) aus Gummi, vorzugsweise aus Silikon gefertigt ist.

5. Drehgelenk nach Anspruch 1, dadurch gekennzeichnet, daß der Lagerkörper (1) aus einem rechteckigen, zwei waagerechte und zwei senkrechte Schenkel (5, 6, 7, 8) umfassenden Flanschrahmen (4) und zwei mit diesem zu einer Einheit verbundenen, annähernd halbkreisförmigen Seitenwangen (9, 10) gebildet ist, welche parallel zu- einander auf einer Seite des Flanschrahmens (4) mit einem der Länge des Drehzylinders (2) entsprechenden Abstand angeordnet sind und den Drehzylinder (2) zwischen sich aufnehmen, durch zwei zum Flanschrahmen (4) parallele und an diesem angrenzende Stege (11, 12) miteinander verbunden sind und je an ihrem halbkreisförmigen Rand einen axial auswärts weisenden Flansch (13, 14) sowie eine Lagerbohrung (15, 16) für eine den Drehzylinder (2) tragende Lagerachse (31, 32) haben, wobei die beiden waagerechten Schenkel (5, 6) des Flanschrahmens (4) und die Flansche (13, 14) der beiden Seitenwangen (9, 10) die streifenförmigen Aufnahmeflächen für das Dichtungsblatt (3) haben und als Spannmittel jeder Aufnahmefläche eine ihrer Form angepaßte Klemmleiste (42, 43, 46, 47) zugeordnet ist, die das Dichtungsblatt (3) auf der Aufnahmefläche (5, 6, 13, 14) festklemmt.

6. Drehgelenk nach Anspruch 5, dadurch gekennzeichnet, daß die Stege (11, 12) zur Längsmittelebene des Flanschrahmens (4) geneigt sind und ihnen je eine zusätzliche Klemmleiste (44 bzw. 45) zugeordnet ist, welche das Dichtungsblatt (3) gegen sie (11, 12) preßt und damit das Dichtungsblatt (3) unter einem vorgegebenen Winkel zum Mantel (22) des Drehzylinders (2) hält.

7. Drehgelenk nach Anspruch 5, dadurch gekennzeichnet, daß sowohl auf dem Flansch (13 bzw. 14) jeder Seitenwange (9, 10) als auch auf der ihm zugeordneten Klemmleiste (46 bzw. 47) an seiner bzw. ihrer dem Dichtungsblatt (3) zugekehrten Seite je ein im Querschnitt keilförmiger Futterstreifen (51 bzw. 52) angebracht ist, wobei die Dicke des Futterstreifens (51) jedes Flansches (13, 14) zum Drehzylinder (2) hin abnimmt und die Dicke des Futterstreifens (52) jeder Klemmleiste (46, 47) in entgegengesetzte Richtung abnimmt, so daß das Dichtungsblatt (3) unter einem vorgegebenen Winkel zum Mantel (22) des Drehzylinders (2) gehalten wird.

8. Drehgelenk nach den Ansprüchen 2, 6 und 7, dadurch gekennzeichnet, daß die Klemmleisten (42 bis 45) gegen die Schenkel (5, 6) des Flanschrahmens (4) bzw. gegen die Stege (11, 12) bzw. gegen die Flansche (13, 14) der Seitenwangen (9, 10) mittels im Abstand voneinander angeordneter Schrauben (48, 49, 50) gespannt sind und hierfür in entsprechenden Abständen in den Klemmleisten (42 bis 45) Durchgangslöcher (53, 54, 55) vorgesehen sind, deren Achsabstand dem Achsabstand der Befestigungslöcher (38) im Dichtungsblatt (3) entspricht.

9. Drehgelenk nach Anspruch 5, dadurch gekennzeichnet, daß der Drehzylinder (2) ein von einem Mantel (22) und zwei Stirnwänden (23, 24) gebildeter Hohlzylinder ist, der im Zentrum jeder Stirnwand (23, 24) eine Lagerbohrung (25 bzw. 26) hat, mittels welcher er auf je einer in einer Seitenwange (9 bzw. 10) und in einem Wandteil (33 bzw. 34) des Rezipienten (20) gehaltenen Steckachse (31 bzw. 32) drehbar gelagert ist und in Längsmitte von einem fest mit ihm verbundenen Führungsrohr (27) queraxial durchdrungen wird, das die pneumatische Förderleitung (30) gleitend beweglich aufnimmt.

10. Drehgelenk nach Anspruch 9, dadurch gekennzeichnet, daß der Drehzylinder (2) aus nichtrostendem Material, etwa nichtrostendem Stahlblech, besteht.

11. Drehgelenk nach Anspruch 9, dadurch gekennzeichnet, daß das Führungsrohr (27) an seinem freiliegenden Ende (27a) gegenüber der Förderleitung (30) abgedichtet ist.

## Claims

1. Rotary joint for a pneumatic feed pipe (30) which can be pivoted by a cantilever, particularly for the pivot joint of suction elevator cantilevers, with two joint components mounted nest to each other, one joint component of which is designed as a bearing member (1) and is attached to a receptacle, and the other joint component of which is formed as a rotary cylinder (2), which receives the feed pipe leading into the receptacle transaxially and together with the latter can be pivoted relative to the first joint component, and with a seal for sealing off both joint components from the atmosphere, characterised in that the seal is a sealing sheet (3) made of elastic material and surrounding the casing (22) of the rotary cylinder (2) in the region of the feed pipe (30), which sheet has a recess (39) calculated according to the pivot angle of the feed pipe (30) and which is pre-stressed on its sealing edges (40a to 40d) bordering on said recess (39) and that strip-like receiving surfaces (5, 6, 13, 14) are formed on the bearing member (1) as attachment surfaces for the sealing sheet (3), two of which (5, 6) extend approximately diametrically opposite each other in the same plane along the rotary cylinder (2), and two of which (13, 14) each border on an end wall (23, 24) of the rotary cylinder (2) and are axially congruent with its casing surface (22), and that clamping means (42, 43, 46, 47) are provided, with the aid of which the sealing sheet (3) is fixed to said receiving surfaces (5, 6, 13, 14) so as to be detachable.

2. Rotary joint according to Claim 1, characterised in that the sealing sheet (3) is rectangular and of constant thickness and is provided close to its edge with fastening holes (38) at a distance from each other and has a rectangular recess (39) symmetrical to the axis, on the edge (40) of which the sealing sheet (3) is sharpened.

3. Rotary joint according to Claim 2, characterised in that the fastening holes (38) in the sealing sheet (3) are elongated holes with their longitudinal axis parallel to the latter.

4. Rotary joint according to Claim 2, characterised in that the sealing sheet (3) is made of rubber, preferably of silicone.

5. Rotary joint according to Claim 1, characterised in that the bearing member (1) is formed of a rectangular flanged frame (4) comprising two horizontal and two vertical sides (5, 6, 7, 8) and two approximately semicircular side walls (9, 10) which are combined therewith into one unit, which are arranged parallel to each other on one side of the flanged frame (4) at a distance corresponding to the length of the rotary cylinder (2) and between them receive the rotary cylinder (2), are connected to each other by two crosspieces (11, 12) parallel to the flanged frame (4) and bordering thereon, and each have on their semicircular edges a flange (13, 14) pointing axially outwards and a mounting bore (15, 16) for a mounting spindle (31, 32) supporting the rotary cylinder (2), the two horizontal sides (5, 6) of the flanged frame (4) and the flanges (13, 14) of the two side walls (9, 10) having the strip-like receiving surfaces for the sealing sheet (3) and a connecting strip (42, 43, 46, 47) adapted to its shape being allocated as clamping means to each receiving surface, which clamps the sealing sheet (3) tightly against the receiving surface (5, 6, 13, 14).

6. Rotary joint according to Claim 5, characterised in that the crosspieces (11, 12) are inclined towards the longitudinal central plane of the flanged frame (4) and to each of them an additional connecting strip (44 or 45) is allocated, which presses the sealing sheet (3) against them (11, 12) and thus keeps the sealing sheet (3) at a pre-determined angle to the casing (22) of the rotary cylinder (2).

7. Rotary joint according to Claim 5, characterised in that a lining strip (51 or 52) which is wedge-shaped in cross-section is applied both to each flange (13 or 14) of each side wall (9, 10) and to each connecting strip (46 or 47) allocated thereto, on their sides facing the sealing sheet (3), the thickness of the lining strip (51) of each flange (13, 14) decreasing towards the rotary cylinder (2) and the thickness of the lining strip (52) of each connecting strip (46, 47) decreasing in the opposite direction, so that the sealing sheet (3) is kept at a predetermined angle to the casing (22) of the rotary cylinder (2).

8. Rotary joint according to Claims 2, 6 and 7, characterised in that the connecting strips (42 to 45) are clamped against the sides (5, 6) of the flanged frame (4) or against the crosspieces (11, 12) or against the flanges (13, 14) of the side walls (9, 10) by means of screws (48, 49, 50) arranged at intervals from each other, and for this purpose through-holes (53, 54, 55) are provided at corresponding intervals in the connecting strips (42 to 45), the distance between the centres of which corresponds to the distance between the centres of the fastening holes (38) in the sealing sheet (3).

9. Rotary joint according to Claim 5, characterised in that the rotary cylinder (2) is a hollow cylinder formed by a casing (22) and two end walls (23, 24) which has a mounting bore (25 or 26) in the centre of each end wall (23, 24), by means of which it is mounted so as to rotate on a insertion spindle (31 or 32) mounted in each side wall (9 or 10) and in a part of the wall (33 or 34) of the receptacle (20), and is penetrated transaxially in its longitudinal centre by a guide pipe (27) connected fixedly therewith which receives the pneumatic feed pipe (30) in a sliding movement.

10. Rotary joint according to Claim 9, characterised in that the rotary cylinder (2) consists of rust-proof material, for instance rust-proof steel sheet.

11. Rotary joint according to Claim 9, characterised in that the guide pipe (27) is sealed off from the feed pipe (30) at its free end (27a).

## Revendications

1. Articulation tournante destinée à une tuyauterie de transport (30) pneumatique comportant un bras pivotant, notamment à l'articulation pivotante de bras aspirateurs comportant deux parties d'articulation juxtaposées dont une partie est un corps de palier (1) fixée sur un récipient, et l'autre partie d'articulation est un cylindre tournant (2) qui reçoit suivant son axe transversal la tuyauterie de transport débouchant dans les récipients, et peut tourner en même temps que celle-ci par rapport à la première partie d'articulation, comportant aussi un joint d'étanchéité destiné à assurer l'étanchéité des deux parties d'articulation par rapport à l'atmosphère, caractérisée en ce que le joint d'étanchéité est une lame d'étanchéité (3) en matière élastique, entourant l'enveloppe (22) du cylindre tournant (2) dans la zone de la tuyauterie de transport (30), ladite lame d'étanchéité (3) présentant un évidement (39) calculé en fonction de l'angle de pivotement de la tuyauterie de transport (30), et étant précontrainte sur ses bords d'étanchéité (40a à 40d) délimitant ledit évidement (39) et en ce que des surfaces de réception (5, 6, 13, 14) en forme de bandes sont formées sur le corps de palier pour servir de surfaces de fixation à la lame d'étanchéité (3), deux d'entre elles (5, 6) à peu près diamétralement opposées l'une à l'autre, s'étendant dans le même plan, le long du cylindre tournant (2), et deux (13, 14) jouxtant chacune une paroi frontale (23, 24) du cylindre tournant (2) et coïncidant axialement avec la surface d'enveloppe (22) de ce dernier, et en ce que des moyens de serrage (42, 43, 46, 47) sont prévus à l'aide desquels la lame d'étanchéité (3) peut être fixée de manière amovible sur ces surfaces de réception (5, 6, 13, 14).

2. Articulation tournante selon la revendication 1, caractérisée en ce que la lame d'étanchéité (3) est rectangulaire et d'épaisseur constante, et est pourvue de trous de fixation (38) disposés espacés les uns des autres tout autour sur son bord, et présentant un évidement (39) rectangulaire, symétrique par rapport à son axe, sur le bord (40) duquel la lame d'étanchéité (3) à des arêtes vives.

3. Articulation tournante selon la revendication 2, caractérisée en ce que les trous de fixation (38) pratiqués dans la lame d'étanchéité (3) sont des trous oblongs disposés parallèlement à l'axe longitudinal de celle-ci.

4. Articulation tournante selon la revendication 2, caractérisée en ce que la lame d'étanchéité (3) est en caoutchouc, de préférence en silicone.

5. Articulation tournante selon la revendication 1, caractérisée en ce que le corps de palier (1) est constitué d'un cadre de bride (4) rectangulaire, comprenant deux côtés horizontaux et deux côtés verticaux (5, 6, 7, 8), et de deux flasques latéraux (9, 10) à peu près semi-circulaires, assemblés audit cadre (4) pour former une unité, les flasques latéraux (9, 10) étant disposés parallèles entre eux, sur un côté du cadre de bride (4), à une distance correspondant à la longueur du cylindre tournant (2), et recevant entre eux le cylindre tournant, en ce que lesdits flasques latéraux sont assemblés entre eux par deux traverses (11, 12) parallèles au cadre de bride (4) et contiguës à celui-ci, et en ce qu'ils présentent chacun sur leur bord semi-circulaire, une bride (13, 14) dirigée axialement vers l'extérieur ainsi qu'un perçage de palier (15, 16) pour un axe de palier (31, 32) supportant le cylindre tournant (2), les deux côtés (5, 6) horizontaux du cadre de bride (4) et les brides (13, 14) des deux flasques latéraux (9, 10) présentant les surfaces de réception en forme de bande destinées à la lame d'étanchéité (3), et une baguette de serrage (42, 43, 46, 47) servant de moyen de serrage pour bloquer la lame d'étanchéité (3) sur la surface de réception (5, 6, 13, 14) est associée à chaque surface de réception et présente une même forme que celle-ci.

6. Articulation tournante selon la revendication 5, caractérisée en ce que les traverses (11, 12) sont inclinées vers le plan médian longitudinal du cadre de bride (4) et en ce qu'une baguette de serrage (14 ou 45) supplémentaire leur est associée, ladite baguette de serrage pressant la lame d'étanchéité (3) contre les traverses (11, 12) et maintenant ainsi la lame d'étanchéité (3) sous un angle donné par rapport à l'enveloppe (22) du cylindre tournant (2).

7. Articulation tournante selon la revendication 5, caractérisée en ce qu'une bande de garniture (51 et 52) dont la section transversale est en forme de coin, est placée sur la bride (13, 14) de chaque flasque latéral (9, 10), ainsi que sur la baguette de serrage (46, 47) qui lui est associée, sur leur côté tourné vers la lame d'étanchéité (3), l'épaisseur de la bande de garniture (51) de chaque bride (13, 14) diminuant vers le cylindre tournant (2) et l'épaisseur de la bande de garniture (52) de chaque baguette de serrage (46, 47) diminuant dans le sens opposé, de sorte que la lame d'étanchéité (3) est maintenue sous un angle donné par rapport à l'enveloppe (22) du cylindre tournant (2).

8. Articulation tournante selon les revendications 2, 6 et 7, caractérisée en ce que les baguettes de serrage (42 à 45) sont serrées contre les côtés (5, 6) du cadre de bride (4) ou contre les traverses (11, 12) ou contre les brides (13, 14) des flasques latéraux (9, 10), au moyen de vis (48, 49, 50) disposées espacées les unes des autres, et en ce qu'il est prévu à cet effet des trous débouchants (53, 54, 55) pratiqués à des distances correspondantes, dans les baguettes de serrage (42 à 45), dont l'entraxe correspond à l'entraxe des trous de fixation (38) de la lame d'étanchéité (3).

9. Articulation tournante selon la revendication 5, caractérisée en ce que le cylindre tournant (2) est un cylindre creux formé par une enveloppe (22) et deux parois frontales (23, 24), qui présente au centre de chaque paroi frontale (23, 24) un perçage de palier (25 et 26) au moyen duquel il est monté sur un demi-arbre (respectivement 31 et 32) fixé dans une paroi latérale (respectivement 9 et 10) et dans une partie de paroi (respectivement 33 et 34) du récipient (20), et est traversé dans le sens de l'axe transversal, au centre longitudinal, par un tube de guidage (27) solidaire du cylindre creux, dans lequel coulisse la tuyauterie de transport (30) pneumatique.

10. Articulation tournante selon la revendication 9, caractérisée en ce que le cylindre (2) tournant est réalisé dans un matériau inoxydable, par exemple en tôle d'acier inoxydable.

11. Articulation tournante selon la revendication 9, caractérisée en ce que le tube de guidage (27) est rendu étanche par rapport à la tuyauterie de transport (30), à son extrémité (27a) libre.

0 196 003

Fig.1

Fig. 2

Fig. 3

1

Fig. 4

Fig. 6

Fig. 5